# EUROPEAN PATENT APPLICATION

(11) **EP 4 718 833 A1**
(43) Date of publication of application: **01.04.2026**
(21) Application number: 25205082.8
(22) Date of filing: 26.09.2025
(51) Int. Cl.: H04N 1/387

(54) **PRINTING METHOD, PRINTING APPARATUS, AND NON-TRANSITORY COMPUTER-READABLE STORAGE MEDIUM STORING PROGRAM**

(30) Priority: 27.09.2024 JP 2024168686
(71) Applicant: Seiko Epson Corporation, Tokyo 160-8801 (JP)
(72) Inventor: TAKISHIMA, Keigo, Suwa-shi, 392-8502 (JP); CARNELLI, Luigi Mario, 1 22076 Como (IT); BIANCHI, Mattia, Como (IT)
(74) Representative: Lewis Silkin LLP

(57) **Abstract**

A printing method includes: by a computer, acquiring a captured image, a first template image, and a second template image; extracting a first corresponding region corresponding to a first region of interest by matching the first template image with the captured image; calculating a first deviation that is a deviation between position coordinates of the first region of interest and position coordinates of the first corresponding region; correcting the second template image based on the first deviation; extracting a second corresponding region corresponding to a second region of interest by matching the corrected second template image with the captured image; calculating a second deviation that is a deviation between position coordinates of the second region of interest and position coordinates of the second corresponding region; correcting a print image based on the second deviation; and causing a printing apparatus to print the corrected print image.

## Description

The present application is based on, and claims priority from JP Application Serial Number 2024-168686, filed September 27, 2024, the disclosure of which is hereby incorporated by reference herein in its entirety.

### BACKGROUND

### 1. Technical Field

The present disclosure relates to a printing method, a printing apparatus, and a non-transitory computer-readable storage medium storing a program.

### 2. Related Art

JP-A-2021-084360 describes a printing method for detecting distortion of a medium by matching a template image including feature points of a pattern with a captured image of the medium having the pattern. This printing method prints an image on the medium in accordance with the pattern by correcting the print image in accordance with the distortion of the medium.

JP-A-2021-084360 is an example of the related art.

In this printing method, when the distortion of the medium is large, matching accuracy between the captured image and the template image may decrease. In this case, correction accuracy of the print image may decrease.

### SUMMARY

A printing method for solving the above problem is a printing method performed by a computer controlling a printing apparatus that performs printing on a medium, and includes: by the computer, acquiring a captured image of the medium having a pattern; acquiring a first template image including a first region of interest set in a pattern image indicating the pattern; acquiring a second template image including a second region of interest set in the pattern image; extracting a first corresponding region corresponding to the first region of interest by matching the first template image with the captured image; calculating a first deviation that is a deviation between position coordinates of the first region of interest in the pattern image and position coordinates of the first corresponding region in the captured image; correcting the second template image based on the first deviation; extracting a second corresponding region corresponding to the second region of interest by matching the corrected second template image with the captured image; calculating a second deviation that is a deviation between position coordinates of the second region of interest in the pattern image and position coordinates of the second corresponding region in the captured image; correcting a print image indicating an image to be printed on the medium based on the second deviation; and causing the printing apparatus to print the corrected print image.

A printing apparatus for solving the above problem includes: a printing unit configured to print an image on a medium; and a control unit, in which the control unit acquires a captured image of the medium having a pattern, acquires a first template image including a first region of interest set in a pattern image indicating the pattern, acquires a second template image including a second region of interest set in the pattern image, extracts a first corresponding region corresponding to the first region of interest by matching the first template image with the captured image, calculates a first deviation that is a deviation between position coordinates of the first region of interest in the pattern image and position coordinates of the first corresponding region in the captured image, corrects the second template image based on the first deviation, extracts a second corresponding region corresponding to the second region of interest by matching the corrected second template image with the captured image, calculates a second deviation that is a deviation between position coordinates of the second region of interest in the pattern image and position coordinates of the second corresponding region in the captured image, corrects a print image indicating an image to be printed on the medium based on the second deviation, and causes the printing unit to print the corrected print image.

A non-transitory computer-readable storage medium storing a program for solving the above problem is a medium storing a program, the program causing a computer that controls a printing apparatus to perform printing on a medium to execute: acquiring a captured image of the medium having a pattern; acquiring a first template image including a first region of interest set in a pattern image indicating the pattern; acquiring a second template image including a second region of interest set in the pattern image; extracting a first corresponding region corresponding to the first region of interest by matching the first template image with the captured image; calculating a first deviation that is a deviation between position coordinates of the first region of interest in the pattern image and position coordinates of the first corresponding region in the captured image; correcting the second template image based on the first deviation; extracting a second corresponding region corresponding to the second region of interest by matching the corrected second template image with the captured image; calculating a second deviation that is a deviation between position coordinates of the second region of interest in the pattern image and position coordinates of the second corresponding region in the captured image; correcting a print image indicating an image to be printed on the medium based on the second deviation; and causing the printing apparatus to print the corrected print image.

### BRIEF DESCRIPTION OF THE DRAWINGS

FIG. 1 is a block diagram illustrating an example of a configuration of a printing apparatus.
FIG. 2 is a plan view illustrating an example of a medium having a pattern.
FIG. 3 is a diagram illustrating an example of a pattern image.
FIG. 4 is a diagram illustrating an example of a captured image.
FIG. 5 is a diagram illustrating an example of a print image.
FIG. 6 is a diagram illustrating an example of mapping data.
FIG. 7 is a diagram illustrating an example of a template image.
FIG. 8 is a diagram illustrating corresponding regions by template matching.
FIG. 9 is a diagram illustrating deviations between regions of interest and the corresponding regions.
FIG. 10 is a diagram illustrating a corrected template image.
FIG. 11 is a diagram illustrating deviations different from those illustrated in FIG. 9.
FIG. 12 is a diagram illustrating a corrected template image different from FIG. 10.
FIG. 13 is a diagram illustrating corresponding regions by the template matching after the correction.
FIG. 14 is a flowchart illustrating an example of printing processing.

### DESCRIPTION OF EMBODIMENTS

Hereinafter, an example of a printing apparatus and a printing method will be described with reference to the drawings. Next, the printing apparatus will be described. The printing apparatus is an inkjet printer that prints an image such as characters and photographs by ejecting ink, which is an example of a liquid, onto a medium such as paper, a fabric, or film.

### PRINTING APPARATUS

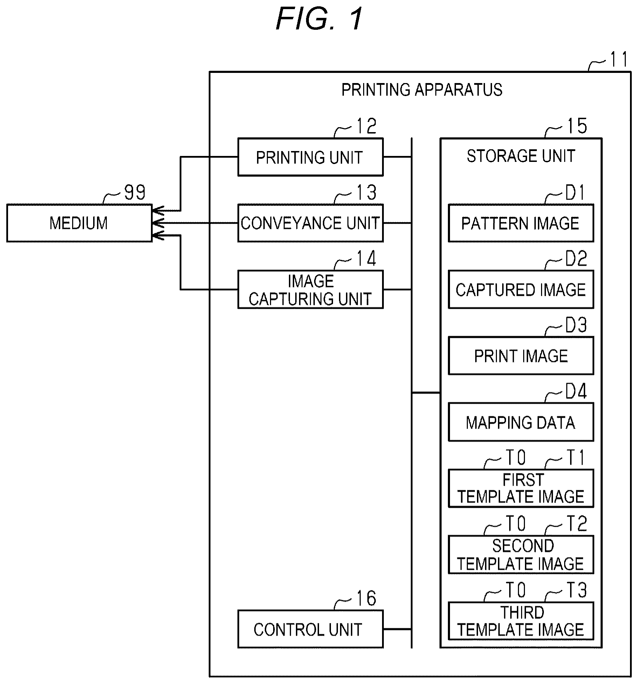

As illustrated in FIG. 1, a printing apparatus 11 includes a printing unit 12. The printing unit 12 is configured to print an image on a medium 99. Specifically, the printing unit 12 prints an image on the medium 99 by ejecting a liquid onto the medium 99. The printing unit 12 includes a head that ejects the liquid. In an example, the printing unit 12 includes a serial head that scans the medium 99. The printing unit 12 may include a line head capable of simultaneously ejecting the liquid over the width of the medium 99. The printing unit 12 may print an image on the medium 99 by fixing a powder to the medium 99. The printing apparatus 11 may be, for example, a laser printer.

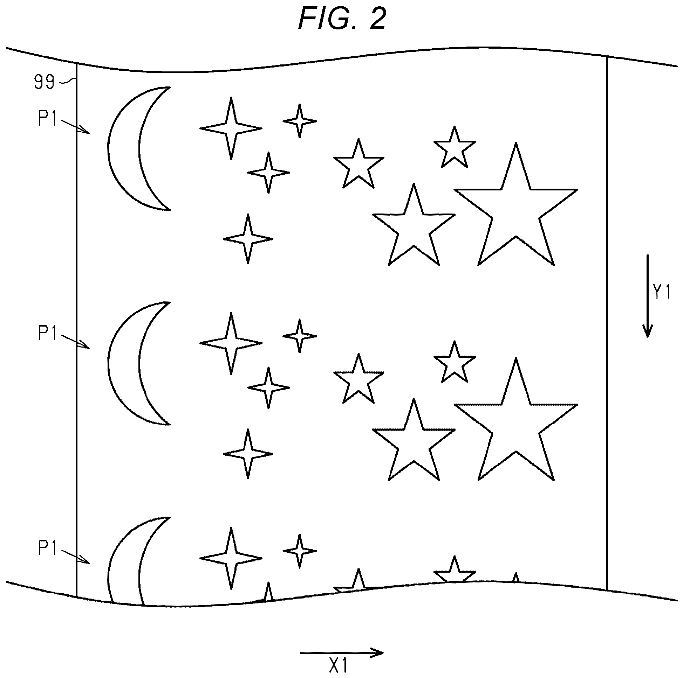

As illustrated in FIG. 2, the medium 99 has patterns P1. The pattern P1 is formed of a figure, a pattern, or the like that is applied to the medium 99 in advance in order to impart a design property to the medium 99. The pattern P1 is periodically formed at the medium 99. In an example, the pattern P1 is periodically formed at the medium 99 so as to repeatedly appear in a conveyance direction Y1. The conveyance direction Y1 is a direction in which the medium 99 is conveyed. The pattern P1 may be formed periodically in a width direction X1. The width direction X1 is a direction different from the conveyance direction Y1. The width direction X1 is a direction serving as an indicator indicating the width of the medium 99. The width direction X1 and the conveyance direction Y1 are directions spreading on a plane of the medium 99.

The medium 99 may be a fabric. The medium 99 is, for example, a jacquard fabric. The jacquard fabric is a fabric constituting the pattern P1 by weaving. The pattern P1 may be formed by the unevenness of weaving, or may be formed by the color of a thread used for weaving. The pattern P1 may be formed by dyeing the medium 99 in advance. The pattern P1 may be formed by performing printing on the medium 99 in advance. The medium 99 is not limited to the jacquard fabric, and may be a simple fabric. The medium 99 is not limited to the fabric, and may be paper, film, or the like.

The medium 99 may be long in the conveyance direction Y1. The medium 99 may be, for example, the fabric, the paper, the film, or the like fed from a roller-shaped raw material. The medium 99 is not limited to being long in the conveyance direction Y1, and may be in the form of a single sheet.

As illustrated in FIG. 1, the printing apparatus 11 may include a conveyance unit 13. The conveyance unit 13 is configured to convey the medium 99. The conveyance unit 13 may include a belt, a roller, or the like. In an example, the conveyance unit 13 intermittently conveys the medium 99. The conveyance unit 13 may continuously convey the medium 99.

The printing apparatus 11 may include an image capturing unit 14. The image capturing unit 14 is configured to capture an image of the medium 99. The image capturing unit 14 includes, for example, a camera. The image capturing unit 14 captures the image of the medium 99 before printing is performed by the printing unit 12.

The image capturing unit 14 may be configured to capture the image of the medium 99 conveyed by the conveyance unit 13. In an example, the image capturing unit 14 is located upstream of the printing unit 12 in the conveyance direction Y1. The image capturing unit 14 may be configured to capture the image of the medium 99 set on an image capturing table.

The image capturing unit 14 captures the image of the medium 99 such that the pattern P1 appears. In an example, the image capturing unit 14 captures the image of the medium 99 over the entire width. The image capturing unit 14 may be configured to scan the medium 99, or may be configured to be long in the width direction X1.

The printing apparatus 11 includes a storage unit 15. The storage unit 15 is configured to store one or more programs. The storage unit 15 includes memories such as a ROM and a RAM. The storage unit 15 may include a storage medium such as an SSD or an HDD.

In addition to the program, the storage unit 15 stores various types of data used during printing. In an example, the storage unit 15 stores a pattern image D1. The storage unit 15 stores a captured image D2. The storage unit 15 stores a print image D3. The storage unit 15 stores mapping data D4. The storage unit 15 stores a plurality of template images T0. The storage unit 15 stores, for example, a first template image T1. The storage unit 15 stores, for example, a second template image T2. The storage unit 15 stores, for example, a third template image T3.

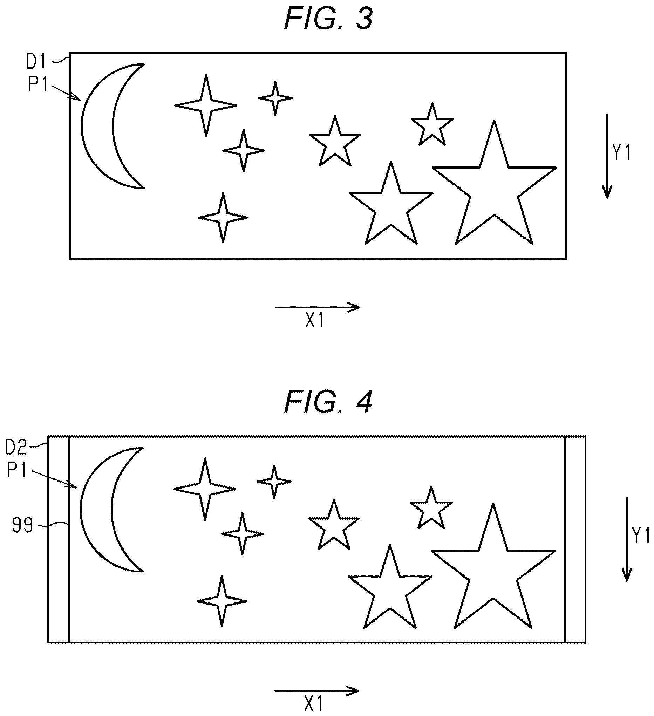

As illustrated in FIG. 3, the pattern image D1 is an image illustrating a pattern P1. The pattern image D1 is basic data of the pattern P1. It can be said that the pattern image D1 is an image illustrating an ideal pattern P1. Specifically, the pattern image D1 indicates an ideal shape of the pattern P1. The pattern image D1 may be generated by the printing apparatus 11. The pattern image D1 may be input to the printing apparatus 11 from an external apparatus different from the printing apparatus 11.

The pattern image D1 may be generated from CAD data indicating the pattern P1 created by software. In an example, the pattern image D1 is obtained from the CAD data of the pattern P1 and a pre-scan image of the medium 99 captured in advance. For example, the pattern image D1 is obtained by correcting brightness of the image indicated by the CAD data based on brightness indicated by the pre-scan image. The CAD data is used to obtain the medium 99 having the pattern P1. Based on the CAD data, the medium 99 having the pattern P1 may be produced by a loom, or the medium 99 having the pattern P1 may be produced by the printing apparatus 11. The pre-scan image may be acquired by capturing an image of the medium 99 having the pattern P1 in advance by the image capturing unit 14. The pre-scan image may be acquired by capturing an image of the medium 99 having the pattern P1 in advance by an image capturing device different from the image capturing unit 14.

As illustrated in FIG. 4, the captured image D2 is an image of the medium 99. The captured image D2 is an image in which the pattern P1 appears. The captured image D2 is the image of the medium 99 captured over the entire width. The captured image D2 is the image of the medium 99 captured so as to include at least one period of the pattern P1. The captured image D2 may be generated by the printing apparatus 11. In an example, the captured image D2 is generated by the image capturing unit 14 capturing the image of the medium 99. The captured image D2 may be input to the printing apparatus 11 from an external apparatus. The captured image D2 may be an image of the medium 99 captured by an image capturing device different from the image capturing unit 14.

The captured image D2 is an image different from the pre-scan image. The captured image D2 is an image captured during printing. In an example, the captured image D2 is an image captured in a process of being conveyed by the conveyance unit 13. It can be said that the captured image D2 is an image representing a state of the medium 99 during printing. Therefore, in the captured image D2, distortion may occur in the medium 99 due to tension applied to the medium 99 during the conveyance, the posture of the medium 99 during printing, and the like.

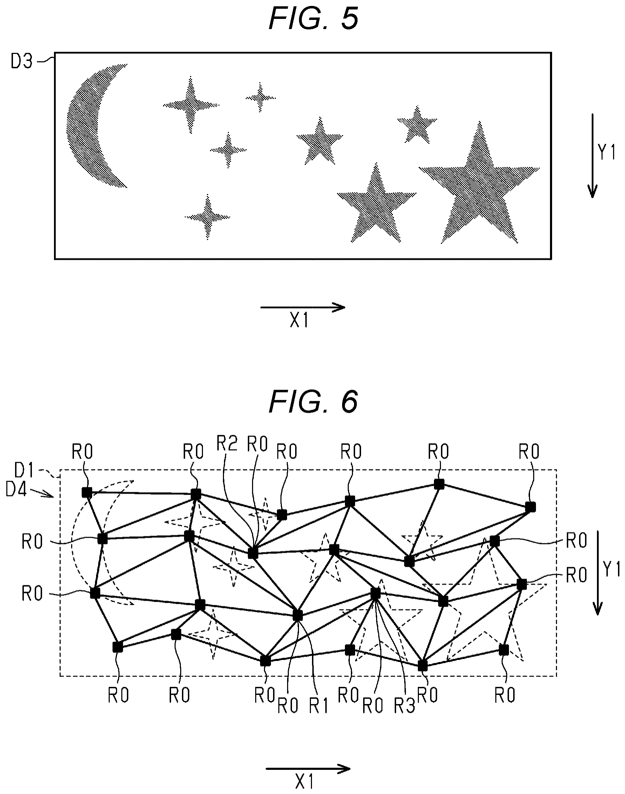

As illustrated in FIG. 5, the print image D3 is an image printed on the medium 99. The print image D3 indicates a shape, a color, and the like of the image printed on the medium 99 having the pattern P1. The print image D3 is printed on the medium 99 by the printing unit 12. The printing unit 12 prints the print image D3 in accordance with the pattern P1. The print image D3 is, for example, an image in which the pattern P1 is colored. The print image D3 is not limited to the image in which the pattern P1 is colored, and may be an image representing a pattern different from the pattern P1, or may be an image in which the pattern P1 is surface-back inverted. The print image D3 may be printed on the same surface of the medium 99 as a surface on which the pattern P1 is applied, or may be printed on an opposite surface. The print image D3 may be generated by the printing apparatus 11. The print image D3 may be input to the printing apparatus 11 from an external apparatus.

As illustrated in FIG. 6, the mapping data D4 is data indicating a plurality of regions of interest R0 set in the pattern image D1. The region of interest R0 is a region including a characteristic portion in the pattern image D1. The region of interest R0 is, for example, a region including a feature point in the pattern image D1. The mapping data D4 indicates a position, a size, and the like of each of the plurality of regions of interest R0 in the pattern image D1. It can be said that the mapping data D4 is data defining the plurality of regions of interest R0. The mapping data D4 may be data accompanying the pattern image D1. The mapping data D4 may be generated by the printing apparatus 11. The mapping data D4 may be generated, for example, by the printing apparatus 11 setting the plurality of regions of interest R0 in the pattern image D1. The mapping data D4 may be input to the printing apparatus 11 from an external apparatus.

The region of interest R0 is set manually or automatically. The region of interest R0 may be manually set by a user operating a computer. The region of interest R0 may be automatically set by the computer operating according to a predetermined algorithm. In this case, the region of interest R0 is set by the computer extracting the feature point from the pattern image D1.

The region of interest R0 may be set at a portion where a luminance gradient is large in the pattern image D1. The region of interest R0 may be set at, for example, an edge of the pattern P1 or a corner of the pattern P1. In the example illustrated in FIG. 6, for ease of understanding, not only the edge and the corner of the pattern P1 but also the plurality of regions of interest R0 are set to be scattered in the pattern image D1.

The mapping data D4 may include a first region of interest R1. That is, the plurality of regions of interest R0 may include the first region of interest R1. The first region of interest R1 is a region including a first feature point in the pattern image D1. The mapping data D4 may include a second region of interest R2. That is, the plurality of regions of interest R0 may include the second region of interest R2. The second region of interest R2 is a region including a second feature point in the pattern image D1. The mapping data D4 may include a third region of interest R3. That is, the plurality of regions of interest R0 may include the third region of interest R3. The third region of interest R3 is a region including a third feature point in the pattern image D1.

One region of interest R0 among the plurality of regions of interest R0 is the first region of interest R1. Among the plurality of regions of interest R0, one region of interest R0 other than the first region of interest R1 is the second region of interest R2. Among the plurality of regions of interest R0, one region of interest R0 other than the first region of interest R1 and the second region of interest R2 is the third region of interest R3.

The first region of interest R1, the second region of interest R2, and the third region of interest R3 are any regions among the plurality of regions of interest R0. Therefore, the first region of interest R1, the second region of interest R2, and the third region of interest R3 are not limited to regions located at positions as illustrated in FIG. 6. The first region of interest R1 may be a region located upstream of the second region of interest R2 in the conveyance direction Y1. The first region of interest R1 may be a region located downstream of the second region of interest R2 in the conveyance direction Y1. The first region of interest R1 may be a region located at a position different from the second region of interest R2 in the width direction X1. The first region of interest R1 may be a region located upstream of the third region of interest R3 in the conveyance direction Y1. The first region of interest R1 may be a region located downstream of the third region of interest R3 in the conveyance direction Y1. The first region of interest R1 may be a region located at a position different from the third region of interest R3 in the width direction X1. The second region of interest R2 may be a region located upstream of the third region of interest R3 in the conveyance direction Y1. The second region of interest R2 may be a region located downstream of the third region of interest R3 in the conveyance direction Y1. The second region of interest R2 may be a region located at a position different from the third region of interest R3 in the width direction X1.

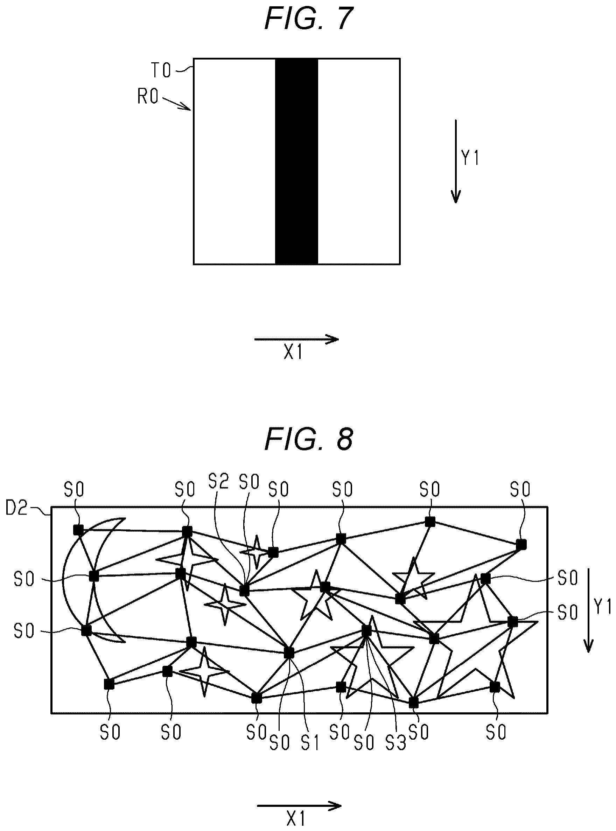

As illustrated in FIG. 7, the template image T0 is an image including the region of interest R0. That is, the template image T0 is an image including the feature point in the pattern image D1. The template image T0 is an image extracted from the pattern image D1. The template image T0 is extracted for each region of interest R0 from the pattern image D1. The first template image T1 is an image including the first region of interest R1. The second template image T2 is an image including the second region of interest R2. The third template image T3 is an image including the third region of interest R3. The template image T0 may be extracted from the pattern image D1 by the printing apparatus 11. The template image T0 may be extracted from the pattern image D1 by an external apparatus. The template image T0 is used for template matching with the captured image D2.

As illustrated in FIG. 1, the printing apparatus 11 includes a control unit 16. The control unit 16 is configured to execute processing in accordance with the program stored in the storage unit 15. The control unit 16 includes a processor such as a CPU or a GPU. The control unit 16 may include a hardware circuit such as an ASIC. In this way, the control unit 16 implements the computer together with the storage unit 15. Therefore, the printing apparatus 11 includes the computer. It can also be said that this computer controls the printing apparatus 11.

The control unit 16 controls various configurations provided in the printing apparatus 11. The control unit 16 controls, for example, the printing unit 12, the conveyance unit 13, and the image capturing unit 14. Accordingly, the control unit 16 may acquire the pattern image D1, the captured image D2, the print image D3, the mapping data D4, the template images T0, and the like. The control unit 16 may acquire the captured image D2 from the image capturing unit 14. The control unit 16 may acquire the mapping data D4 by setting the plurality of regions of interest R0 in the pattern image D1. The control unit 16 may acquire the template images T0 from the pattern image D1. The control unit 16 may communicate with the external apparatus. The control unit 16 may acquire, from the external apparatus, the pattern image D1, the captured image D2, the print image D3, the mapping data D4, the template images T0, and the like.

The control unit 16 is configured to correct the print image D3. Specifically, the control unit 16 is configured to correct the print image D3 in accordance with the distortion of the medium 99. The control unit 16 prints the print image D3 in accordance with the pattern P1 by correcting the print image D3. The control unit 16 performs template matching on the captured image D2 in order to grasp the distortion of the medium 99. Specifically, the control unit 16 matches the template image T0 with the captured image D2. The control unit 16 performs template matching on the captured image D2 for each template image T0. The control unit 16 matches the first template image T1 with the captured image D2. The control unit 16 matches the second template image T2 with the captured image D2. The control unit 16 matches the third template image T3 with the captured image D2.

As illustrated in FIG. 8, the control unit 16 extracts corresponding regions S0 by matching the template images T0 with the captured image D2. The corresponding region S0 is a region where the template image T0 is matched in the captured image D2. The corresponding region S0 is a region corresponding to the region of interest R0 provided in the template image T0. That is, the corresponding region S0 is a region including a feature point corresponding to the feature point provided in the region of interest R0.

The control unit 16 extracts the plurality of corresponding regions S0 by performing the template matching on the captured image D2. The control unit 16 may extract a first corresponding region S1 by matching the first template image T1 with the captured image D2. The first corresponding region S1 is a region corresponding to the first region of interest R1. The first corresponding region S1 is a region including a feature point corresponding to the first feature point. The control unit 16 may extract a second corresponding region S2 by matching the second template image T2 with the captured image D2. The second corresponding region S2 is a region corresponding to the second region of interest R2. The second corresponding region S2 is a region including a feature point corresponding to the second feature point. The control unit 16 may extract a third corresponding region S3 by matching the third template image T3 with the captured image D2. The third corresponding region S3 is a region corresponding to the third region of interest R3. The third corresponding region S3 is a region including a feature point corresponding to the third feature point. Thus, the plurality of corresponding regions S0 may include the first corresponding region S1, the second corresponding region S2, the third corresponding region S3, and the like. The control unit 16 grasps the position of the pattern P1 in the captured image D2 by extracting the plurality of corresponding regions S0. Accordingly, the control unit 16 grasps the distortion of the medium 99.

The first corresponding region S1 may be a region located upstream of the second corresponding region S2 in the conveyance direction Y1. The first corresponding region S1 may be a region located downstream of the second corresponding region S2 in the conveyance direction Y1. The first corresponding region S1 may be a region located at a position different from the second corresponding region S2 in the width direction X1. The first corresponding region S1 may be a region located upstream of the third corresponding region S3 in the conveyance direction Y1. The first corresponding region S1 may be a region located downstream of the third corresponding region S3 in the conveyance direction Y1. The first corresponding region S1 may be a region located at a position different from the third corresponding region S3 in the width direction X1. The second corresponding region S2 may be a region located upstream of the third corresponding region S3 in the conveyance direction Y1. The second corresponding region S2 may be a region located downstream of the third corresponding region S3 in the conveyance direction Y1. The second corresponding region S2 may be a region located at a position different from the third corresponding region S3 in the width direction X1. A positional relationship among the first corresponding region S1, the second corresponding region S2, and the third corresponding region S3 is determined by a positional relationship among the first region of interest R1, the second region of interest R2, and the third region of interest R3.

In the printing apparatus 11, in order to improve printing quality, the medium 99 may be conveyed while tension is applied thereto. Therefore, in the printing apparatus 11, the distortion may occur in the medium 99 during printing. Further, the distortion may occur in the medium 99 depending on the posture of the medium 99 during printing, a storage state of the medium 99, and the like. When the distortion of the medium 99 is large, accuracy of the template matching may decrease. That is, the distortion of the pattern P1 appearing in the captured image D2 may reduce matching accuracy with the template image T0. In this case, since the printing apparatus 11 cannot correctly grasp the position of the pattern P1, the printing apparatus 11 may not accurately correct the print image D3.

### Printing Method

Next, a printing method that prevents the accuracy of the template matching from decreasing will be described. In short, the printing apparatus 11 corrects the template image T0 in accordance with the distortion of the medium 99 to reduce the possibility that the accuracy of the template matching decreases.

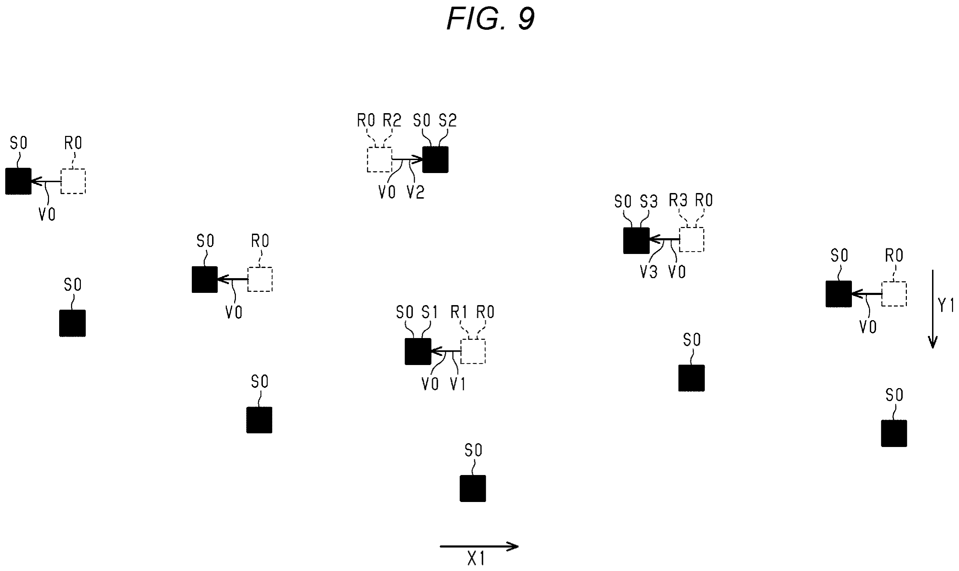

As illustrated in FIG. 9, in a case where the distortion occurs in the medium 99, when the template image T0 is matched with the captured image D2, deviations may occur between position coordinates of the regions of interest R0 indicated by the mapping data D4 and position coordinates of the corresponding regions S0 in the captured image D2. Specifically, a deviation V0 may occur between the position coordinates of the region of interest R0 and the position coordinates of the corresponding region S0. The deviation V0 represents the distortion of the medium 99. When the distortion does not occur in the medium 99, the position coordinates of the region of interest R0 and the position coordinates of the corresponding region S0 coincide with each other.

The printing apparatus 11 calculates the deviation V0 by matching the template image T0 with the captured image D2. Specifically, the printing apparatus 11 calculates the deviation V0 for each corresponding region S0 by performing the template matching on the captured image D2 for each template image T0. The printing apparatus 11 may calculate a first deviation V1 by matching the first template image T1 with the captured image D2. The first deviation V1 is a deviation of the first corresponding region S1 relative to the first region of interest R1. The printing apparatus 11 may calculate a second deviation V2 by matching the second template image T2 with the captured image D2. The second deviation V2 is a deviation of the second corresponding region S2 relative to the second region of interest R2. The printing apparatus 11 may calculate a third deviation V3 by matching the third template image T3 with the captured image D2. The third deviation V3 is a deviation of the third corresponding region S3 relative to the third region of interest R3.

The printing apparatus 11 corrects the template image T0 based on one or more deviations V0. Specifically, the printing apparatus 11 corrects one template image T0 among the plurality of template images T0 based on the deviation V0 due to the corresponding region S0 corresponding to the region of interest R0 provided in another template image T0. For example, the printing apparatus 11 corrects the template image T0 to be corrected based on the deviation V0 in the region of interest R0 located around the region of interest R0 provided in the template image T0.

A case where the printing apparatus 11 extracts N corresponding regions S0 by template matching will be considered. N is a natural number of two or more. In this case, the printing apparatus 11 corrects the template image T0 corresponding to an M-th corresponding region S0 among the N corresponding regions S0 based on the deviations V0 due to one or more corresponding regions S0 among the plurality of corresponding regions S0 other than the M-th corresponding region S0. M is a natural number of one or more and N or less. That is, the printing apparatus 11 corrects the template image T0 based on the deviations V0 due to the other corresponding regions S0 other than the corresponding region S0 corresponding to the template image T0 to be corrected.

The printing apparatus 11 may correct the template image T0 based on the deviations V0 due to other corresponding regions S0 located downstream of the corresponding region S0 corresponding to the template image T0 to be corrected in the conveyance direction Y1. The printing apparatus 11 may correct the template image T0 based on the deviations V0 due to other corresponding regions S0 located at different positions in the width direction X1 from the corresponding region S0 corresponding to the template image T0 to be corrected. The printing apparatus 11 may correct the template image T0 based on the deviations V0 due to other corresponding regions S0 located upstream of the corresponding region S0 corresponding to the template image T0 to be corrected in the conveyance direction Y1. The printing apparatus 11 may correct the template image T0 based on the deviations V0 in the region of interest R0 having a small distance from the region of interest R0 provided in the template image T0 to be corrected. In this case, the template image T0 is accurately corrected.

The printing apparatus 11 may correct the second template image T2 based on the deviations V0 other than the second deviation V2 among the plurality of deviations V0. The printing apparatus 11 may correct the second template image T2 based on the first deviation V1. The printing apparatus 11 may correct the second template image T2 based on the first deviation V1 and the third deviation V3. When a distance between the second region of interest R2 and the first region of interest R1 is small, the second template image T2 is accurately corrected. When a distance between the second region of interest R2 and the third region of interest R3 is small, the second template image T2 is accurately corrected. The printing apparatus 11 may correct the first template image T1 based on the second deviation V2, the third deviation V3, and the like. The printing apparatus 11 may correct the third template image T3 based on the first deviation V1, the second deviation V2, and the like.

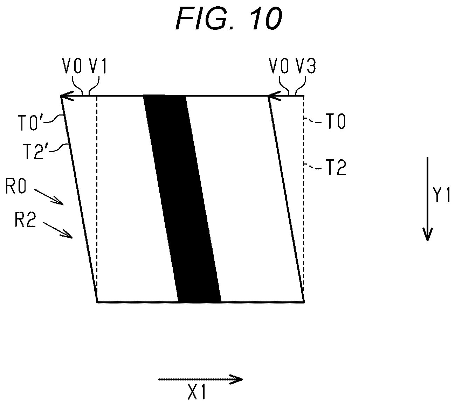

As illustrated in FIG. 10, the printing apparatus 11 corrects the template image T0 based on the one or more deviations V0. In FIG. 10, an image indicated by broken lines indicates the template image T0 before correction. In FIG. 10, an image indicated by a solid line indicates a corrected template image T0'. The printing apparatus 11 performs projective transformation on the template image T0 based on, for example, the one or more deviations V0. That is, the printing apparatus 11 corrects the template image T0 by moving vertices of the template image T0. In an example, the printing apparatus 11 corrects the second template image T2 based on the first deviation V1 and the third deviation V3.

The printing apparatus 11 may determine a correspondence relationship between the vertices of the template image T0 and the deviations V0 by a predetermined algorithm. The printing apparatus 11 may make the deviations V0 correspond to the four corners of the template image T0 one to one. The printing apparatus 11 may make the plurality of deviations V0 correspond to one of the four corners of the template image T0.

The printing apparatus 11 acquires the template image T0' in which the distortion of the medium 99 is reflected by correcting the template image T0. It can be said that the printing apparatus 11 updates the template image T0 to the template image T0'. The printing apparatus 11 may update all the template images T0 to the template images T0' or may update some of the template images T0 to the template images T0'. In an example, the printing apparatus 11 acquires a second template image T2' by correcting the second template image T2. The printing apparatus 11 may acquire a first template image T1' by correcting the first template image T1. The printing apparatus 11 may acquire a third template image T3' by correcting the third template image T3. The printing apparatus 11 may correct all of the plurality of template images T0. The printing apparatus 11 may correct some of the template images T0 out of the plurality of template images T0.

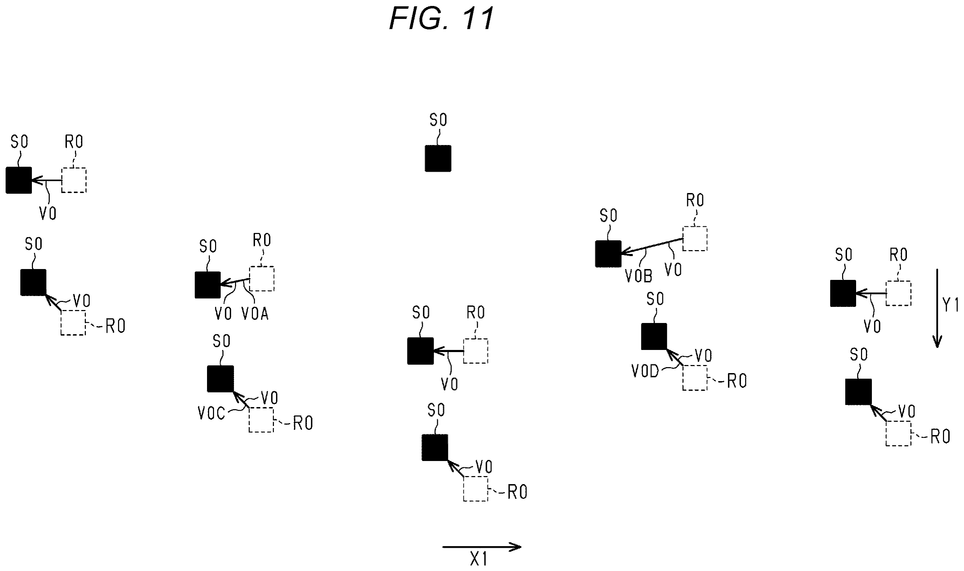

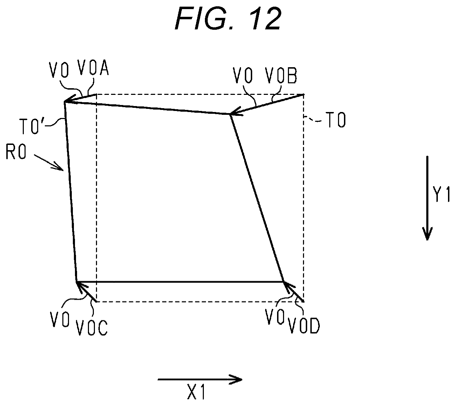

As illustrated in FIGS. 11 and 12, the printing apparatus 11 may correct the template image T0 based on three or more of the deviations V0. For example, the printing apparatus 11 may correct the template image T0 based on a deviation V0A, a deviation V0B, a deviation V0C, and a deviation V0D among the plurality of deviations V0. In an example, the printing apparatus 11 corrects the template image T0 by moving the four corners of the template image T0 based on the deviation V0A, the deviation V0B, the deviation V0C, and the deviation V0D, respectively.

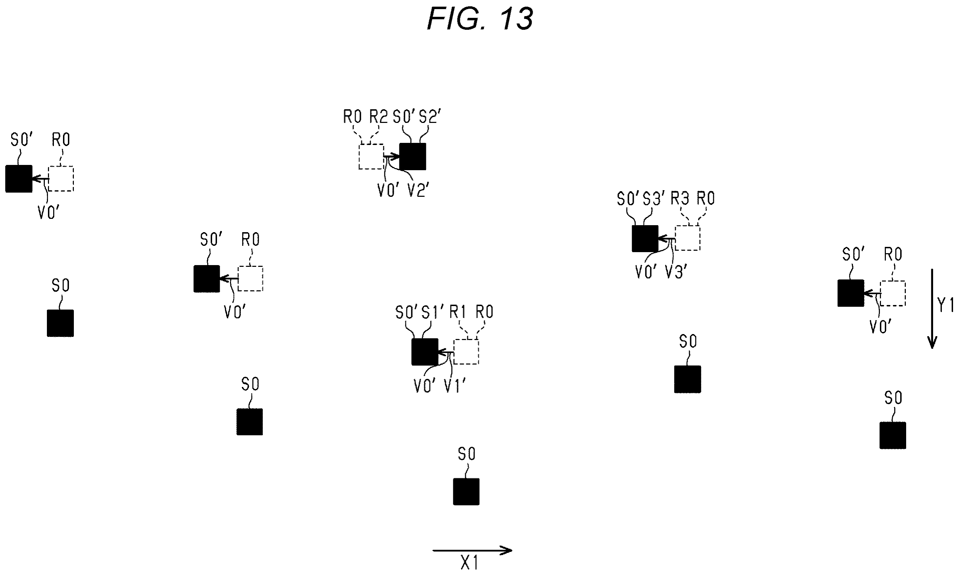

As illustrated in FIG. 13, the printing apparatus 11 extracts corresponding regions S0' by matching the template image T0' with the captured image D2. The corresponding region S0' is a region where the corrected template image T0' is matched in the captured image D2. The corresponding region S0' is a region corresponding to the region of interest R0 provided in the template image T0'. It can be said that the printing apparatus 11 updates the corresponding region S0 to the corresponding region S0'. The printing apparatus 11 may update all the corresponding regions S0 to the corresponding regions S0' or may update some of the corresponding regions S0 to the corresponding regions S0'. A deviation of the corresponding region S0' relative to the region of interest R0 is a deviation V0'. The corrected template image T0' has higher matching accuracy with respect to the region of interest R0 as compared with the template image T0 before correction. Therefore, the deviation V0' accurately represents the distortion of the medium 99 as compared with the deviation V0. The printing apparatus 11 can accurately grasp the position of the pattern P1 based on the deviation V0'. Therefore, the printing apparatus 11 can accurately grasp the distortion of the medium 99 based on the deviation V0'.

The printing apparatus 11 may extract the first corresponding region S1' by matching the corrected first template image T1' with the captured image D2. The printing apparatus 11 may calculate a first deviation V1' that is a deviation of the first corresponding region S1' relative to the first region of interest R1. The printing apparatus 11 may extract the second corresponding region S2' by matching the corrected second template image T2' with the captured image D2. The printing apparatus 11 may calculate a second deviation V2' that is a deviation of the second corresponding region S2' relative to the second region of interest R2. The printing apparatus 11 may extract a third corresponding region S3' by matching the corrected third template image T3' with the captured image D2. The printing apparatus 11 may calculate a third deviation V3' that is a deviation of the third corresponding region S3' relative to the third region of interest R3.

The positional relationship among the first corresponding region S1', the second corresponding region S2', and the third corresponding region S3' is not significantly different from the positional relationship among the first corresponding region S1, the second corresponding region S2, and the third corresponding region S3. Therefore, the positional relationship between the first corresponding region S1' and the second corresponding region S2' is not significantly different from the positional relationship between the first corresponding region S1 and the second corresponding region S2. The positional relationship between the first corresponding region S1' and the third corresponding region S3' is not significantly different from the positional relationship between the first corresponding region S1 and the third corresponding region S3. The positional relationship between the second corresponding region S2' and the third corresponding region S3' is not significantly different from the positional relationship between the second corresponding region S2 and the third corresponding region S3. In addition, the positional relationship between the first corresponding region S1 and the second corresponding region S2' and the positional relationship between the second corresponding region S2 and the first corresponding region S1' are not significantly different from the positional relationship between the first corresponding region S1 and the second corresponding region S2. The positional relationship between the first corresponding region S1 and the third corresponding region S3' and the positional relationship between the third corresponding region S3 and the first corresponding region S1' are not significantly different from the positional relationship between the first corresponding region S1 and the third corresponding region S3. The positional relationship between the second corresponding region S2 and the third corresponding region S3' and the positional relationship between the third corresponding region S3 and the second corresponding region S2' are not significantly different from the positional relationship between the second corresponding region S2 and the third corresponding region S3. For example, the second corresponding region S2' may be a region located upstream of the first corresponding region S1 in the conveyance direction Y1. The second corresponding region S2' may be a region located downstream of the first corresponding region S1 in the conveyance direction Y1. The second corresponding region S2' may be a region located at a position different from the first corresponding region S1 in the width direction X1. The second corresponding region S2' may be a region located upstream of the third corresponding region S3 in the conveyance direction Y1. The second corresponding region S2' may be a region located downstream of the third corresponding region S3 in the conveyance direction Y1. The second corresponding region S2' may be a region located at a position different from the third corresponding region S3 in the width direction X1.

The printing apparatus 11 corrects the print image D3 based on the calculated deviation V0'. In an example, the printing apparatus 11 corrects the print image D3 based on the second deviation V2'. The printing apparatus 11 may correct the print image D3 based on the first deviation V1'. The printing apparatus 11 may correct the print image D3 based on the third deviation V3'. The printing apparatus 11 corrects the print image D3 by, for example, affine transformation.

The printing apparatus 11 may correct the print image D3 based on the plurality of deviations V0'. The larger the number of deviations V0' used for correcting the print image D3, the more accurately the print image D3 is corrected. The printing apparatus 11 may correct the print image D3 based on the deviation V0 in addition to the deviation V0'. For example, the printing apparatus 11 may recognize that the deviation V0 by the template image T0 before correction accurately represents the distortion of the medium 99 for a portion where the distortion of the medium 99 is estimated to be relatively small. The printing apparatus 11 may use the deviation V0 to correct the print image D3. The printing apparatus 11 prints the corrected print image D3 on the medium 99. Accordingly, the print image D3 is printed on the medium 99 in accordance with the pattern P1.

Next, an example of printing processing will be described. The printing processing is processing executed by a computer. The printing processing may be executed by the computer provided in the printing apparatus 11 or may be executed by an external computer connected to the printing apparatus 11. In an example, the printing processing is executed by the control unit 16. The printing processing is executed, for example, by the control unit 16 operating according to the program stored in the storage unit 15. The printing processing is started when the control unit 16 receives a printing instruction from the user.

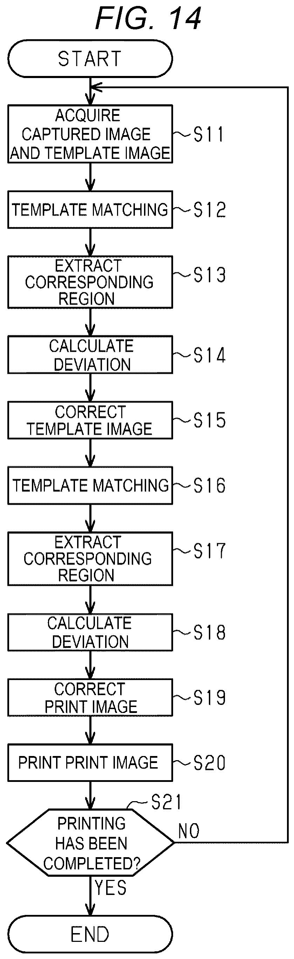

As illustrated in FIG. 14, in step S11, the control unit 16 acquires the captured image D2 and the template image T0. The control unit 16 acquires the captured image D2 and the template image T0 from the storage unit 15. The control unit 16 may acquire the plurality of template images T0. In an example, the control unit 16 acquires the first template image T1 and the second template image T2. The control unit 16 may acquire the third template image T3.

In step S12, the control unit 16 performs the template matching on the captured image D2. Specifically, the control unit 16 matches the template image T0 with the captured image D2. The control unit 16 may sequentially match the plurality of template images T0 with the captured image D2. In an example, the control unit 16 matches the first template image T1 with the captured image D2. The control unit 16 may match the second template image T2 with the captured image D2. The control unit 16 may match the third template image T3 with the captured image D2.

In step S13, the control unit 16 extracts the corresponding region S0 from the captured image D2. Specifically, the control unit 16 extracts, from the captured image D2, the corresponding region S0 corresponding to the region of interest R0 provided in the template image T0. At this time, the control unit 16 extracts the same number of corresponding regions S0 as the template images T0 used in the template matching. In an example, the control unit 16 extracts the first corresponding region S1. The control unit 16 may extract the second corresponding region S2. The control unit 16 may extract the third corresponding region S3.

In step S14, the control unit 16 calculates the deviation V0 between the region of interest R0 and the corresponding region S0. Specifically, the control unit 16 calculates the deviation V0 between the position coordinates of the region of interest R0 and the position coordinates of the corresponding region S0. At this time, the control unit 16 calculates the same number of deviations V0 as the extracted corresponding regions S0. In an example, the control unit 16 calculates the first deviation V1. The control unit 16 may calculate the second deviation V2. The control unit 16 may calculate the third deviation V3.

In step S15, the control unit 16 corrects the template image T0 based on the deviation V0. The control unit 16 acquires the template image T0' by correcting the template image T0 based on the one or more deviations V0. At this time, the control unit 16 may acquire the plurality of template images T0' by correcting the plurality of template images T0. In an example, the control unit 16 corrects the second template image T2 based on the first deviation V1. The control unit 16 may correct the second template image T2 based on the first deviation V1 and the third deviation V3. The control unit 16 acquires the second template image T2' by correcting the second template image T2. The control unit 16 may acquire the first template image T1' by correcting the first template image T1. The control unit 16 may acquire the third template image T3' by correcting the third template image T3.

When correcting the template image T0, the control unit 16 may receive designation of the deviation V0 used for correcting the template image T0. For example, in step S15, the control unit 16 may receive whether to use the third deviation V3 when correcting the second template image T2. The control unit 16 may correct the second template image T2 based on the first deviation V1 and the third deviation V3 when the use of the third deviation V3 is received. The control unit 16 may correct the second template image T2 based on the first deviation V1 when the use of the third deviation V3 is not received. By not using the third deviation V3, a calculation load of the control unit 16 is reduced as compared with the case where the third deviation V3 is used.

In step S16, the control unit 16 performs template matching on the captured image D2. Specifically, the control unit 16 matches the corrected template image T0' with the captured image D2. The control unit 16 may sequentially match the plurality of template images T0' with the captured image D2. In an example, the control unit 16 matches the second template image T2' with the captured image D2. The control unit 16 may match the first template image T1' with the captured image D2. The control unit 16 may match the third template image T3' with the captured image D2.

In step S17, the control unit 16 extracts the corresponding region S0' from the captured image D2. Specifically, the control unit 16 extracts, from the captured image D2, the corresponding region S0' corresponding to the region of interest R0 provided in the template image T0'. At this time, the control unit 16 extracts the same number of corresponding regions S0' as the template images T0' used for template matching. In an example, the control unit 16 extracts the second corresponding region S2'. The control unit 16 may extract the first corresponding region S1'. The control unit 16 may extract the third corresponding region S3'.

In step S18, the control unit 16 calculates the deviation V0' between the region of interest R0 and the corresponding region S0'. Specifically, the control unit 16 calculates the deviation V0' between the position coordinates of the region of interest R0 and the position coordinates of the corresponding region S0'. At this time, the control unit 16 calculates the same number of deviations V0' as the extracted corresponding regions S0'. In an example, the control unit 16 calculates the second deviation V2'. The control unit 16 may calculate the first deviation V1'. The control unit 16 may calculate the third deviation V3'.

In step S19, the control unit 16 corrects the print image D3 based on the deviation V0'. In an example, the control unit 16 corrects the print image D3 based on the second deviation V2'. The control unit 16 may correct the print image D3 based on the first deviation V1' and the second deviation V2'. The control unit 16 may correct the print image D3 based on the second deviation V2' and the third deviation V3'. The control unit 16 may correct the print image D3 based on the first deviation V1', the second deviation V2', and the third deviation V3'. The control unit 16 may correct the print image D3 based on the deviation V0 in addition to the deviation V0'. In this case, a calculation load of the printing apparatus 11 is reduced as compared with the case where the print image D3 is corrected based on the plurality of deviations V0'.

In step S20, the control unit 16 causes the printing unit 12 to print the corrected print image D3. Accordingly, the print image D3 is printed on the medium 99 in accordance with the pattern P1.

In step S21, the control unit 16 determines whether the printing is completed. Specifically, the control unit 16 determines whether printing on an entire region of the medium 99 is completed. For example, the control unit 16 determines whether the printing is completed based on a print job. When the printing is completed, the control unit 16 ends the printing processing. When the printing is not completed, the control unit 16 returns the processing to step S11. The control unit 16 repeats steps S11 to S20 to sequentially print the print image D3 on the medium 99 in accordance with the pattern P1.

### Actions and Effects of the Embodiment

Then, actions and effects of the embodiment described above will be described.
(1) The printing method includes correcting, by the computer, the second template image T2 based on the first deviation V1. The printing method includes extracting, by the computer, the second corresponding region S2' by matching the corrected second template image T2' with the captured image D2. The printing method includes calculating, by the computer, the second deviation V2'. The printing method includes correcting, by the computer, the print image D3 based on the second deviation V2'. The printing method includes causing, by the computer, the printing apparatus 11 to print the corrected print image D3. According to the above method, matching accuracy of the second template image T2' with respect to the captured image D2 is improved. Accordingly, the print image D3 is accurately corrected.
(2) In the captured image D2, the first corresponding region S1 is a region located downstream of the second corresponding region S2' in the conveyance direction Y1. According to the above method, the extraction accuracy of the second corresponding region S2' is improved by the first deviation V1.
(3) The printing method includes correcting, by the computer, the second template image T2 based on the first deviation V1 and the third deviation V3. According to the above method, the extraction accuracy of the second corresponding region S2' is improved by the first deviation V1 and the third deviation V3.
(4) The printing method includes receiving, by the computer, whether to use the third deviation V3 to correct the second template image T2. The printing method includes correcting, by the computer, the second template image T2 based on the first deviation V1 and the third deviation V3 when the use of the third deviation V3 is received. The printing method includes correcting, by the computer, the second template image T2 based on the first deviation V1 when the use of the third deviation V3 is not received. According to the above method, the calculation load of the computer is reduced by not using the third deviation V3.
(5) In the captured image D2, the second corresponding region S2' is a region located at a position different from the first corresponding region S1 in the width direction X1. According to the above method, the extraction accuracy of the second corresponding region S2' is improved by the first deviation V1.

### Modifications

The above embodiment can be implemented with the following modifications. The embodiment described above and the following modifications can be implemented in combination within a range where no technical contradictions occur.

The printing apparatus 11 may set the region of interest R0 in the captured image D2. The printing apparatus 11 may extract the template image T0 from the captured image D2. The printing apparatus 11 may match the template image T0 with the pattern image D1. The printing apparatus 11 may extract the corresponding region S0 from the pattern image D1. Even in this case, effects similar to those of the above embodiment can be obtained.

The printing apparatus 11 may be controlled by a computer provided in an external apparatus different from the printing apparatus 11. The external apparatus may acquire the captured image D2. The external apparatus may match the template image T0 with the captured image D2. The external apparatus may extract the corresponding region S0 from the captured image D2. The external apparatus may calculate the deviation V0 between the region of interest R0 and the corresponding region S0. The external apparatus may correct the template image T0 based on the deviation V0. The external apparatus may acquire the corrected template image T0'. The external apparatus may correct the template image T0' in the captured image D2. The external apparatus may extract the corresponding region S0' from the captured image D2. The external apparatus may calculate the deviation V0' between the region of interest R0 and the corresponding region S0'. The external apparatus may correct the print image D3 based on the deviation V0'. The external apparatus may provide the corrected print image D3 to the printing apparatus 11.

The liquid to be ejected by the printing unit 12 is not limited to ink, and may be, for example, a liquid material including particles of a functional material dispersed or mixed in a liquid. For example, the printing unit 12 may eject a liquid material containing, in a dispersed or dissolved form, a material such as an electrode material or a pixel material used in manufacture and so on of a liquid crystal display, an electroluminescent display, and a surface-emitting display.

### Technical Ideas

In the following description, technical ideas understood from the embodiments and the modifications described above and actions and effects thereof will be described.
(A) A printing method is a printing method performed by a computer controlling a printing apparatus that performs printing on a medium, and includes: by the computer, acquiring a captured image of the medium having a pattern; acquiring a first template image including a first region of interest set in a pattern image indicating the pattern; acquiring a second template image including a second region of interest set in the pattern image; extracting a first corresponding region corresponding to the first region of interest by matching the first template image with the captured image; calculating a first deviation that is a deviation between position coordinates of the first region of interest in the pattern image and position coordinates of the first corresponding region in the captured image; correcting the second template image based on the first deviation; extracting a second corresponding region corresponding to the second region of interest by matching the corrected second template image with the captured image; calculating a second deviation that is a deviation between position coordinates of the second region of interest in the pattern image and position coordinates of the second corresponding region in the captured image; correcting a print image indicating an image to be printed on the medium based on the second deviation; and causing the printing apparatus to print the corrected print image. According to the above method, the matching accuracy of the second template image with respect to the captured image is improved. Accordingly, the print image is accurately corrected.
(B) In the above printing method, in the captured image, the first corresponding region may be a region located downstream of the second corresponding region in a conveyance direction in which the medium is conveyed. According to the above method, the extraction accuracy of the second corresponding region is improved by the first deviation.
(C) The above printing method may further include: by the computer, acquiring a third template image including a third region of interest set in the pattern image; extracting a third corresponding region corresponding to the third region of interest by matching the third template image with the captured image, the third corresponding region being located at a position different from the first corresponding region in a width direction different from a conveyance direction in which the medium is conveyed; calculating a third deviation that is a deviation between position coordinates of the third region of interest in the pattern image and position coordinates of the third corresponding region in the captured image; and correcting the second template image based on the first deviation and the third deviation. According to the above method, the extraction accuracy of the second corresponding region is improved by the first deviation and the third deviation.
(D) The above printing method may further include: by the computer, receiving whether to use the third deviation to correct the second template image; correcting the second template image based on the first deviation and the third deviation when the use of the third deviation is received; and correcting the second template image based on the first deviation when the use of the third deviation is not received. According to the above method, the calculation load of the computer is reduced by not using the third deviation.
(E) In the above printing method, in the captured image, the second corresponding region may be a region located at a position different from the first corresponding region in the width direction of the medium. According to the above method, the extraction accuracy of the second corresponding region is improved by the first deviation.
(F) A printing apparatus includes: a printing unit configured to print an image on a medium; and a control unit, in which the control unit acquires a captured image of the medium having a pattern, acquires a first template image including a first region of interest set in a pattern image indicating the pattern, acquires a second template image including a second region of interest set in the pattern image, extracts a first corresponding region corresponding to the first region of interest by matching the first template image with the captured image, calculates a first deviation that is a deviation between position coordinates of the first region of interest in the pattern image and position coordinates of the first corresponding region in the captured image, corrects the second template image based on the first deviation, extracts a second corresponding region corresponding to the second region of interest by matching the corrected second template image with the captured image, calculates a second deviation that is a deviation between position coordinates of the second region of interest in the pattern image and position coordinates of the second corresponding region in the captured image, corrects a print image indicating an image to be printed on the medium based on the second deviation, and causes the printing unit to print the corrected print image. According to the above configuration, effects similar to those of the printing method described above can be obtained.
(G) A non-transitory computer-readable storage medium storing a program is a medium storing a program, the program causing a computer that controls a printing apparatus to perform printing on a medium to execute: acquiring a captured image of the medium having a pattern; acquiring a first template image including a first region of interest set in a pattern image indicating the pattern; acquiring a second template image including a second region of interest set in the pattern image; extracting a first corresponding region corresponding to the first region of interest by matching the first template image with the captured image; calculating a first deviation that is a deviation between position coordinates of the first region of interest in the pattern image and position coordinates of the first corresponding region in the captured image; correcting the second template image based on the first deviation; extracting a second corresponding region corresponding to the second region of interest by matching the corrected second template image with the captured image; calculating a second deviation that is a deviation between position coordinates of the second region of interest in the pattern image and position coordinates of the second corresponding region in the captured image; correcting a print image indicating an image to be printed on the medium based on the second deviation; and causing the printing apparatus to print the corrected print image. According to the non-transitory computer-readable storage medium storing a program, effects similar to those of the printing method described above can be obtained.

## Claims

1. A printing method performed by a computer controlling a printing apparatus that performs printing on a medium, the printing method comprising:
by the computer,
acquiring a captured image of the medium having a pattern;
acquiring a first template image including a first region of interest set in a pattern image indicating the pattern;
acquiring a second template image including a second region of interest set in the pattern image;
extracting a first corresponding region corresponding to the first region of interest by matching the first template image with the captured image;
calculating a first deviation that is a deviation between position coordinates of the first region of interest in the pattern image and position coordinates of the first corresponding region in the captured image;
correcting the second template image based on the first deviation;
extracting a second corresponding region corresponding to the second region of interest by matching the corrected second template image with the captured image;
calculating a second deviation that is a deviation between position coordinates of the second region of interest in the pattern image and position coordinates of the second corresponding region in the captured image;
correcting a print image indicating an image to be printed on the medium based on the second deviation; and
causing the printing apparatus to print the corrected print image.

2. The printing method according to claim 1, wherein
in the captured image, the first corresponding region is a region located downstream of the second corresponding region in a conveyance direction in which the medium is conveyed.

3. The printing method according to claim 1, further comprising:
by the computer,
acquiring a third template image including a third region of interest set in the pattern image;
extracting a third corresponding region corresponding to the third region of interest by matching the third template image with the captured image, the third corresponding region being located at a position different from the first corresponding region in a width direction different from a conveyance direction in which the medium is conveyed;
calculating a third deviation that is a deviation between position coordinates of the third region of interest in the pattern image and position coordinates of the third corresponding region in the captured image; and
correcting the second template image based on the first deviation and the third deviation.

4. The printing method according to claim 3, further comprising:
by the computer,
receiving whether to use the third deviation to correct the second template image;
correcting the second template image based on the first deviation and the third deviation when the use of the third deviation is received; and
correcting the second template image based on the first deviation when the use of the third deviation is not received.

5. The printing method according to claim 1, wherein
in the captured image, the second corresponding region is a region located at a position different from the first corresponding region in a width direction of the medium.

6. A printing apparatus comprising:
a printing unit configured to print an image on a medium; and
a control unit, wherein
the control unit
acquires a captured image of the medium having a pattern,
acquires a first template image including a first region of interest set in a pattern image indicating the pattern,
acquires a second template image including a second region of interest set in the pattern image,
extracts a first corresponding region corresponding to the first region of interest by matching the first template image with the captured image,
calculates a first deviation that is a deviation between position coordinates of the first region of interest in the pattern image and position coordinates of the first corresponding region in the captured image,
corrects the second template image based on the first deviation,
extracts a second corresponding region corresponding to the second region of interest by matching the corrected second template image with the captured image,
calculates a second deviation that is a deviation between position coordinates of the second region of interest in the pattern image and position coordinates of the second corresponding region in the captured image,
corrects a print image indicating an image to be printed on the medium based on the second deviation, and
causes the printing unit to print the corrected print image.

7. A non-transitory computer-readable storage medium storing a program, the program causing a computer that controls a printing apparatus to perform printing on a medium to execute:
acquiring a captured image of the medium having a pattern;
acquiring a first template image including a first region of interest set in a pattern image indicating the pattern;
acquiring a second template image including a second region of interest set in the pattern image;
extracting a first corresponding region corresponding to the first region of interest by matching the first template image with the captured image;
calculating a first deviation that is a deviation between position coordinates of the first region of interest in the pattern image and position coordinates of the first corresponding region in the captured image;
correcting the second template image based on the first deviation;
extracting a second corresponding region corresponding to the second region of interest by matching the corrected second template image with the captured image;
calculating a second deviation that is a deviation between position coordinates of the second region of interest in the pattern image and position coordinates of the second corresponding region in the captured image;
correcting a print image indicating an image to be printed on the medium based on the second deviation; and
causing the printing apparatus to print the corrected print image.
